(19) Europäisches Patentamt

European Patent Office

Office européen des brevets

(11) Veröffentlichungsnummer: **0 354 349 B1**

(12) **EUROPÄISCHE PATENTSCHRIFT**

(45) Veröffentlichungstag der Patentschrift: **02.12.92**

(21) Anmeldenummer: **89112414.1**

(22) Anmeldetag: **07.07.89**

(51) Int. Cl.⁵: **B01D 17/025**, C02F 1/40

(54) Transportable Vorrichtung zum Aufbereiten von Schmutzwässern, insbesondere Grubenwässern.

(30) Priorität: **06.08.88 DE 3826779**

(43) Veröffentlichungstag der Anmeldung:
**14.02.90 Patentblatt 90/07**

(45) Bekanntmachung des Hinweises auf die
Patenterteilung:
**02.12.92 Patentblatt 92/49**

(84) Benannte Vertragsstaaten:
**AT CH FR LI NL**

(56) Entgegenhaltungen:
**EP-A- 0 026 122**
**DE-A- 2 033 021**
**DE-A- 2 160 159**
**FR-A- 2 591 128**
**US-A- 4 333 835**

(73) Patentinhaber: **Neuhäuser GMBH + CO.**
**Lager- und Fördersysteme**
**Scharnhorststrasse 16**
**W-4670 Lünen(DE)**

(72) Erfinder: **Bosse, Karl-Heinz, Dipl.-Ing.**
**Aplerbecker Markstrasse 26**
**W-4600 Dortmund 41(DE)**
Erfinder: **Schrang, Manfred, Dipl.-Ing.**
**Kanalstrasse 51**
**W-4709 Bergkamen(DE)**

(74) Vertreter: **Honke, Manfred, Dr. et al**
**Patentanwälte Andrejewski, Honke & Partner**
**Theaterplatz 3 Postfach 10 02 54**
**W-4300 Essen 1(DE)**

Rank Xerox (UK) Business Services

## Beschreibung

Die Erfindung betrifft eine transportable Vorrichtung zum Aufbereiten von Schmutzwässern, insbesondere Grubenwässern, mit einer 1. Reinigungsstufe und einer 2. Reinigungsstufe und Plattenpaketen in den Reinigungsstufen.

Die Grubenwasserentsorgung, wie beispielsweise das Pumpen von Grubenwässern Untertage, verlangt aus ökologischen Gründen vorbeugende Maßnahmen in Form von wirksamen Wasserreinigungstechniken. Die quantitative Entsorgung von Grubenwässern bedingt Wasserreinigung im Sinne einer weiteren Nutzung und Entlastung für das Ökosystem. Weitere Nutzung bedeutet Gewährleistung eines vorgegebenen Qualitätsstandards in bezug auf die entsorgten Grubenwässer.

Man kennt eine Vorrichtung zum Aufbereiten von Schmutzwässern, insbesondere ölhaltigen Wässern, bei welcher eine 1. Reinigungsstufe und eine 2. Reinigungsstufe verwirklicht ist, jedoch beide Reinigungsstufen wellenförmige Plattenpakete aufweisen, deren um ein vorgegebenes Maß distanzierte Platten einerseits weder in Schrägstellung, andererseits ausschließlich in Strömungsrichtung angeordnet sind. Man will auf diese Weise erreichen, daß die Schwerstoffe absinken und die Ölbestandteile aufsteigen (vgl. EP-A-0 026 122).

Außerdem ist eine Vorrichtung zum Aufbereiten von Schmutzwässern bekannt, bei welcher eine Mehrzahl von Zylindern mit gelochter Zylinderwand in Strömungsrichtung hintereinander angeordnet ist, und zwar mit zur Strömungsrichtung orthogonaler Zylinderachse. Auf diese Weise soll ein Separator für die von dem Wasser zu trennenden Schmutzbestandteile verwirklicht werden, wobei wiederum die leichteren Schmutzbestandteile aufsteigen und die schwereren Schmutzbestandteile absinken (vgl. US-A-4 333 835).

Der Erfindung liegt die Aufgabe zugrunde, eine transportable Vorrichtung zum Aufbereiten von Schmutzwässern, insbesondere Grubenwässern der eingangs beschriebenen Art zu schaffen, welche einfach zu bedienen ist und wartungsfrei arbeitet, insbesondere den sicherheits- und betriebstechnischen Voraussetzungen für den Einsatz im Untertagebau genügt.

Zur Lösung dieser Aufgabe ist die gattungsgemäße Vorrichtung gekennzeichnet durch einen Aufbereitungsbehälter mit in Wasserdurchflußrichtung Vorreinigungskammer, einer der Vorreinigungskammer nachgeordneten Reinigungskammer 1. Stufe, einer dieser Reinigungskammer nachgeordneten Verteilerkammer und einer der Verteilerkammer nachgeordneten Reinigungskammer 2. Stufe, wobei der Vorreinigungskammer ein Öl/Wasser-Feinseparationsraum bzw. -behälter vorgeordnet und der Reinigungskammer 2. Stufe ein Reinwassersammelraum bzw. -behälter mit einem Reinwasseraustrittsstutzen nachgeordnet ist, wobei die Vorreinigungskammer durch ein bodenfreies Umlenkblech in einen Wassereintrittsraum und einen Wasseraustrittsraum unterteilt ist und in dem Wassereintrittsraum ein Schmutzwassereintrittsstutzen mündet, wobei die Reinigungskammer 1. Stufe eine Mehrzahl von parallel und in Schrägstellung übereinander sowie quer zur Wasserdurchflußrichtung angeordneten Querstromplatten und die Reinigungskammer 2. Stufe eine Mehrzahl von parallel und in Schrägstellung übereinander sowie in Wasserdurchflußrichtung angeordneten Parallelstromplatten aufweist, wobei unterhalb der Querstromplatten der Reinigungskammer 1. Stufe und der Parallelstromplatten der Reinigungskammer 2. Stufe voneinander getrennte Sedimentsammel- und Abzugsräume bzw. -rinnen vorgesehen sind und wobei im oberen Randbereich bzw. Wasserspiegelbereich der Reinigungskammer 1. Stufe parallel zur Wasserdurchflußrichtung eine über die Vorreinigungskammer hinaus zum Öl/Wasser-Feinseparationsraum führende Abscheiderinne angeordnet ist. - Diese Maßnahmen der Erfindung haben zur Folge, daß eine integrierte Wasserreinigung aus mehreren Reinigungskammern bzw. -stufen verwirklicht wird. In der Vorreinigungskammer wird das zulaufende Schmutzwasser bzw. Grubenwasser von Konglomeraten, die aus Gestein und Kohle bestehen, mit einem spezifischen Gewicht > 1, d.h. von allen Bestandteilen, die relativ leicht absetzbar sind, vorgereinigt. In der nachgeschalteten Reinigungskammer 1. Stufe erfolgt die Trennung der freien Öle und Fette vom Grubenwasser. Die gleichsam vertikal quer zur Wasserdurchflußrichtung aufsteigenden Öle und Fette werden an der Oberfläche dieser Reinigungskammer über einen Skimmer bzw. die Ölabscheiderinne abgenommen. Das vorgereinigte Wasser wird sodann der Verteilerkammer zugeführt. Über die Verteilerkammer erfolgt Wasserverteilung für die Reinigungskammer 2. Stufe. In dieser Reinigungskammer erfolgt die Trennung aller freien, absetzbaren Bestandteile vom vorgereinigten Wasser. Durch die Zugabe verschiedener Hilfsmittel wird die totale Koagulation von Kolloiden, d.h. die Flockung aller Schwebestoffe erreicht. Das gereinigte Wasser fließt durch die von den Parallelstromplatten vorgegebene Strömungsrichtung zur Oberkante der Parallelstromplatten bzw. der Reinigungskammer 2. Stufe. Die Flocken setzen sich mit zunehmender Größe nach unten ab. Dazu sind die Sedimentsammel-und Abzugsräume bzw. -rinnen vorgesehen. Das gereinigte Wasser erreicht schließlich den Reinwassersammelraum und wird dort nach hundertprozentiger Ölabscheidung als Brauch/Nutzwasser abgeführt.

Weitere erfindungswesentliche Merkmale sind im folgenden aufgeführt. So sieht die Erfindung vor, daß in der Vorreinigungskammer im oberen Randbereich bzw. Wasserspiegelbereich des Wassereintrittsraumes und des Wasseraustrittsraumes jeweils ein Ölabscheider mit zu dem Öl/Wasser-Feinseparationsraum führenden Ablaufleitungen angeordnet ist. Hier findet eine Vorentölung größerer freier Mengen an Ölen und Öl/Fettverbindungen statt. Bei den Ölabscheidern handelt es sich um spezifisch angepasste Öl-Skimmer, welche die Vor- und Nachentölung von freien, dispergierten und teilemulgierten Kohlenwasserstoffverbindungen übernehmen. In dem Öl/Wasser-Feinseparationsraum erfolgt eine weitere, abschließende Öl/Wassertrennung der angefallenen Mengen. Das hier enthaltene, nahezu wasserfreie Ölgemisch wird separat in entsprechenden Behältern aufgefangen und einer weiteren Entsorgung zugeführt. Das anfallende Wasser wird zu einem Schmutzwasser-Vorlaufbehälter zurückgeführt. Der Öl/Wasser-Feinseparationsraum weist zur getrennten Öl/Wasserabführung einen hochliegenden Ölauslaufstutzen und einen tiefliegenden Wasserauslaufstutzen bzw. einen Wasserauslaufstutzen mit tiefliegender Wassereintrittsöffnung auf. Insoweit wird ein hirtenstabartiger Wasserauslaufstutzen verwirklicht. Erfindungsgemäß mündet der Sedimentsammel- und Abzugsraum unterhalb der Querstromplatten der Reinigungskammer 1. Stufe bodenseitig in die Vorreinigungskammer und weist frontseitig im Bodenbereich der Vorreinigungskammer eine Austrittsöffnung auf. Der Abzug von Konglomeratsrückständen aus der Vorreinigungskammer und der Reinigungskammer 1. Stufe erfolgt getrennt von der Abschlämmung in der Reinigungskammer 2. Stufe in dazu bereitstehende Entsorgungsbehälter mit "verlängerter Füllzeit" zum Absetzen der Feststoffpartikel durch Verdichten des Schlammrückstandes und der Wasserrückführung zum Schmutz- bzw. Grubenwasservorlauf. Diese Sedimentsammel- und Abzugsräume sind aus Gründen der Wasserführung im unteren Bereich der Verteilerkammer bzw. zwischen der Reinigungskammer 1. Stufe und der Verteilerkammer getrennt. - Weiter empfiehlt die Erfindung, daß die Querstromplatten in der Reinigungskammer 1. Stufe und die Parallelstromplatten in der Reinigungskammer 2 Stufe als gewellte Platten ausgebildet sind, weil der Trennwirkungsgrad wesentlich von den in den Reinigungskammern installierten Oberflächen bestimmt wird. Folglich hat die Auswahl der Plattenquerschnitte unter Berücksichtigung der notwendigen Gesamtflächen in den beiden als Abscheider funktionierenden Reinigungskammern zu erfolgen. Vorzugsweise ist zwischen der Reinigungskammer 2. Stufe und dem Reinwassersammelraum eine Überlaufkante auf der Mündungshöhe der Parallelstromplatten bzw. der durch sie gebildeten Zwischenräume angeordnet. Das gereinigte Wasser fließt durch die von den Parallelstromplatten vorgegebene Strömungsrichtung zur Oberkante der Parallelstromplatten bzw. der Reinigungskammer 2. Stufe. Die Flocken setzen sich mit zunehmender Größe nach unten ab, sie sedimentieren im Sedimentsammel- und Abzugsraum unterhalb der Parallelstromplatten. Dadurch steht in dem Reinwassersammelraum trüb- und ölfreies Brauch/Nutzwasser zur Verfügung. Vorsorglich kann auch der Reinwassersammelraum einen bodenseitigen Flocken- und Restwasserabzug sowie eine höherliegende Eintrittsöffnung für den Reinwasseraustrittsstutzen aufweisen. Auch in diesem Fall findet ein hirtenstabähnlicher Reinwasserstutzen Verwendung.

Endlich lehrt die Erfindung, daß an dem Schmutzwassereintrittsstutzen eine auf der Behälteraußenseite montierte Rohrschlange mit einer Schmutzwasserpumpe unter Zwischenschaltung eines Absperrorgans angeschlossen ist und in die Rohrstränge der Rohrschlange Meßleitungen und Dosierleitungen für Additiv-Zugabe münden. Die Zugabe und Dosierung flüssiger Zuschlagstoffe bzw. Additive regeln Dosierpumpen über einen statischen Mischer am Schmutzwassereinlaß. Die Wasserreinigungsvorgängewerden gleichzeitig durch die Kombination der Additive mit Hilfe der beschriebenen Reaktionsstrecken durchgeführt. Die Rohrschlange mit der dosierten Additiv-Zugabe bildet gleichsam den chemischen Teil der erfindungsgemäßen Aufbereitungsvorrichtung, wobei eine Additiv-Zugabe allerdings auch in den Reinigungskmmern erfolgen kann. Die Additive sorgen für eine optimierte Koagulation und Flockung mit günstigen Sedimentationseigenschaften, ferner für eine schnelle Neutralisierung der elektrostatischen Bindungen zwischen den kolloidalen Partikeln. Dadurch ist schnelle Flockenbildung gewährleistet.

Die durch die Erfindung erreichten Vorteile sind im wesentlichen darin zu sehen, daß eine transportable Vorrichtung zum Aufbereiten von Schmutzwässern und insbesondere Grubenwässern verwirklicht wird, die sich durch kompakte und funktionstüchtige Bauweise auszeichnet. Die erfindungsgemäße Vorrichtung arbeitet nach dem Schwerkraftprinzip und praktisch ohne mechanische und elektromechanische Hilfen, wie beispielsweise Antriebe. Sie berücksichtigt die sicherheits- und betriebstechnischen Parameter für den Einsatz im Untertagebau. Außerdem ist die erfindungsgemäße Vorrichtung einfach zu bedienen und arbeitet wartungsfrei.

Im folgenden wird die Erfindung anhand einer lediglich ein Ausführungsbeispiel darstellenden Zeichnung näher erläutert; es zeigen:

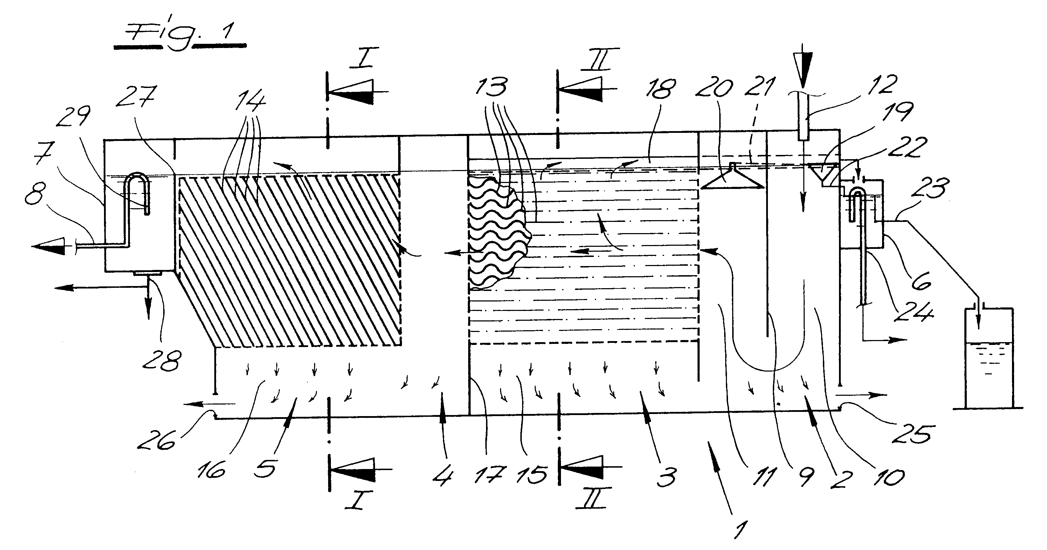

Fig. 1 eine erfindungsgemäße Aufbereitungsvorrichtung in schematischer Seitenansicht,

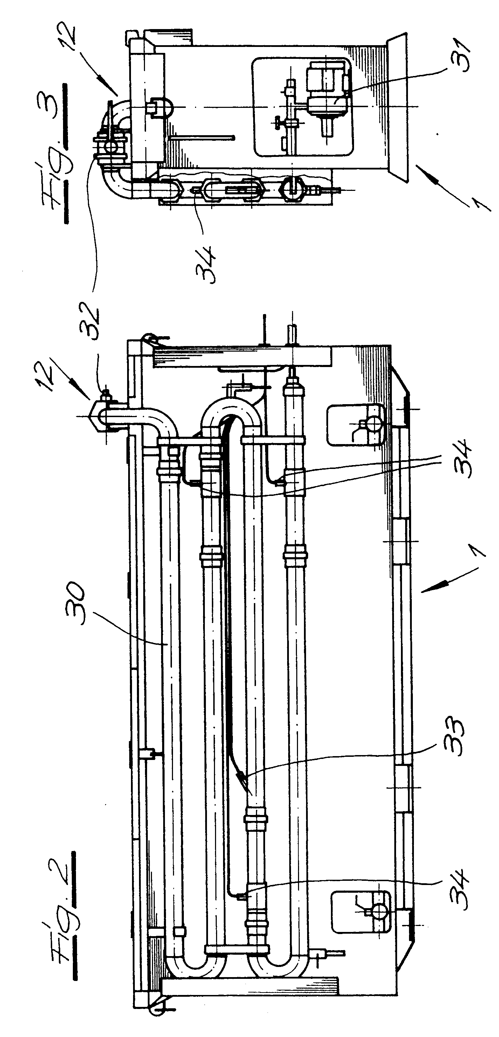

Fig. 2 den Gegenstand nach Fig. 1 in geschlossener Bauweise und Seitenansicht,

Fig. 3 den Gegenstand nach Fig. 2 in Frontansicht,

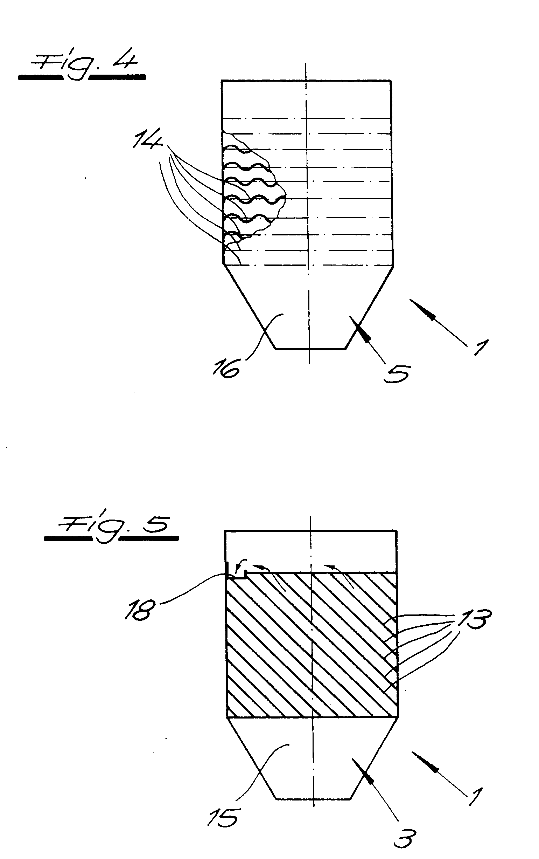

Fig. 4 einen Vertikalschnitt I-I durch den Gegenstand nach Fig. 1, und

Fig. 5 einen Vertikalschnitt II-II durch den Gegenstand nach Fig. 1.

In den Figuren ist eine transportable Vorrichtung zum Aufbereiten von Schmutzwässern, insbesondere Grubenwässern, dargestellt. Diese Vorrichtung weist einen Aufbereitungsbehälter 1 mit in Wasserdurchflußrichtung Vorreinigungskammer 2, einer der Vorreinigungskammer 2 nachgeordneten Reinigungskammer 1. Stufe 3, einer dieser Reinigungskammer 3 nachgeordneten Verteilerkammer 4 und einer der Verteilerkammer 4 nachgeordneten Reinigungskammer 2. Stufe 5 auf, wobei der Vorreinigungskammer 2 ein Öl/Wasser-Feinseparationsraum bzw. -behälter 6 vorgeordnet und der Reinigungskammer 2. Stufe 5 ein Reinwassersammelraum bzw. -behälter 7 mit einem Reinwasseraustrittsstutzen 8 nachgeordnet ist. Die Vorreinigungskammer 2 ist durch ein bodenfreies Umlenkblech 9, welches also nicht bis zum Boden der Vorreinigungskammer geführt ist, in einen Wassereintrittsraum 10 und einen Wasseraustrittsraum 11 unterteilt. In den Wassereintrittsraum 10 mündet ein Schmutzwassereintrittsstutzen 12. Die Reinigungskammer 1. Stufe 3 weist eine Mehrzahl von parallel und in Schrägstellung übereinander sowie quer zur Wasserdurchflußrichtung angeordneten Querstromplatten 13 auf. Die Reinigungskammer 2. Stufe 5 weist eine Mehrzahl von parallel und in Schrägstellung übereinander sowie in Wasserdurchflußrichtung angeordneten Parallelstromplatten 14 auf. Die Parallelstromplatten 14 steigen in Wasserdurchflußrichtung an. Unterhalb der Querstromplatten 13 der Reinigungskammer 1. Stufe 3 und der Parallelstromplatten 14 der Reinigungskammer 2. Stufe 5 sind voneinander getrennte Sedimentsammel- und Abzugsräume bzw. -rinnen 15, 16 vorgesehen. Die Trennwand 17 befindet sich zwischen der Reinigungskammer 1. Stufe 3 und der Verteilerkammer 4. Im oberen Randbereich bzw. Wasserspiegelbereich der Reinigungskammer 1. Stufe 3, also dort, wo die Querstromplatten 13 enden, ist parallel zur Wasserdurchflußrichtung eine über die Vorreinigungskammer 2 hinaus bis zum Öl/Wasser-Feinseparationsraum 6 führende Ölabscheiderinne 18 angeordnet, bei der es sich um einen Skimmer für Öle und Fette handelt.

In der Vorreinigungskammer 2 ist im oberen Randbereich bzw. Wasserspiegelbereich des Wassereintrittsraumes 10 und des Wasseraustrittsraumes 11 jeweils ein Ölabscheider 19, 20 bzw. Skimmer mit zu dem Öl/Wasser-Feinseparationsraum 6 führenden Ablaufleitungen 21, 22 angeordnet. Bei dem Ölabscheider 19 in dem Wassereintrittsraum 10 kann es sich um einen oben geöffneten Trichter, bei dem Ölabscheider 20 in dem Wasseraustrittsraum 11 und einen unten geöffneten Trichter handeln. Der Öl/Wasser-Feinseparationsraum 6 weist einen hochliegenden Ölauslaufstutzen 23 und einen tiefliegenden Wasserauslaufstutzen 24 auf, der als hirtenstabartiger Stutzen ausgebildet sein kann. Der Sedimentsammel- und Abzugsraum 15 unterhalb der Querstromplatten 13 der Reinigungskammer 1. Stufe 3 mündet bodenseitig in der Vorreinigungskammer 2, welche stirnseitig im Bodenbereich eine Austrittsöffnung 25 besitzt. Eine solche Austrittsöffnung 26 weist auch der Sedimentsammel- und Abzugsraum 16 unterhalb der Parallelstromplatten 14 auf. - Der Querstromplatten 13 und Parallelstromplatten 14 in der Reinigungskammer 1. Stufe 3 und Reinigungskammer 2. Stufe 5 sind als gewellte Platten ausgebildet. Zwischen der Reinigungskammer 2. Stufe 5 und dem Reinwassersammelraum 7 ist eine Überlaufkante 27 auf der Mündungshöhe bzw. Endhöhe der Parallelstromplatten 14 der durch sie gebildeten Zwischenräume angeordnet. Der Reinwassersammelraum 7 weist einen bodenseitigen Flocken- und Restwasserabzug 28 sowie eine höherliegende Eintrittsöffnung 29 für den Reinwasseraustrittsstutzen 8 auf, der ebenfalls als hirtenstabähnlicher Stutzen ausgebildet ist.

An den Schmutzwassereintrittsstutzen 12 ist eine auf der Behälteraußenseite montierte Rohrschlange 30 mit einer Schmutzwasserpumpe 31 unter Zwischenschaltung eines Absperrorgans 32 angeschlossen. In die Rohrstränge der Rohrschlange 30 münden Meßleitungen 33 und Dosierleitungen 34 mit Dosierpumpen für Additiv-Zugabe.

**Patentansprüche**

1. Transportable Vorrichtung zum Aufbereiten von Schmutzwässern, insbesondere Grubenwässern, mit einer 1. Reinigungsstufe und einer 2. Reinigungsstufe und Plattenpaketen in den Reinigungsstufen, **gekennzeichnet durch** einen Aufbereitungsbehälter mit in Wasserdurchflußrichtung Vorreinigungskammer (2), einer der Vorreinigungskammer (2) nachgeordneten Reinigungskammer 1. Stufe (3), einer dieser Reinigungskammer (3) nachgeordneten Verteilerkammer (4) und einer der Verteilerkammer (4) nachgeordneten Reinigungskammer 2. Stufe (5), wobei der Vorreinigungskammer (2) ein Öl/Wasser-Feinseparationsraum (6) vorgeordnet und der Reinigungskammer 2. Stufe (5) ein Reinwassersammelraum (7) mit einem Reinwasseraustrittsstutzen (8) nachgeordnet ist,
wobei die Vorreinigungskammer (2) durch ein bodenfreies Umlenkblech (9) in einen Wassereintrittsraum (10) und einen Wasseraustrittsraum (11) unterteilt ist und in dem Wassereintrittsraum (10) ein Schmutzwassereintrittsstutzen (12) mündet,
wobei die Reinigungskammer 1. Stufe (3) eine Mehrzahl von parallel und in Schrägstellung übereinander sowie quer zur Wasserdurchflußrichtung angeordneten Querstromplatten (13) und die Reinigungskammer 2. Stufe (5) eine Mehrzahl von parallel und in Schrägstellung übereinander sowie in Wasserdurchflußrichtung angeordneten Parallelstromplatten (14) aufweist,
wobei unterhalb der Querstromplatten (13) der Reinigungskammer 1. Stufe (3) und der Parallelstromplatten (14) der Reinigungskammer 2. Stufe (5) voneinander getrennte Sedimentsammel- und Abzugsräume (15, 16) vorgesehen sind,
und wobei im oberen Randbereich bzw. Wasserspiegelbereich der Reinigungskammer 1. Stufe (3) parallel zur Wasserdurchflußrichtung eine über die Vorreinigungskammer (2) hinaus bis zum Öl/WasserFeinseparationsraum (6) führende Ölabscheiderinne (18) angeordnet ist.

2. Vorrichtung nach Anspruch 1, dadurch gekennzeichnet, daß in der Vorreinigungskammer (2) im oberen Randbereich bzw. Wasserspiegelbereich des Wassereintrittsraumes (10) und des Wasseraustrittsraumes (11) jeweils ein Ölabscheider (19, 20) mit zu dem Öl/Wasser-Feinseparationsraum (6) führende Ablaufleitungen (21, 22) angeordnet ist.

3. Vorrichtung nach Anspruch 1 oder 2, dadurch gekennzeichnet, daß der Öl/Wasser-Feinseparationsraum (6) einen hochliegenden Ölauslaufstutzen (23) und einen tiefliegenden Wasserauslaufstutzen (24) aufweist.

4. Vorrichtung nach einem der Ansprüche 1 bis 3, dadurch gekennzeichnet, daß der Sedimentsammel- und Abzugsraum (15) unterhalb der Querstromplatten (13) der Reinigungskammer 1. Stufe (3) bodenseitig in die Vorreinigungskammer (2) mündet und im Bodenbereich eine Austrittsöffnung (25) aufweist.

5. Vorrichtung nach einem der Ansprüche 1 bis 4, dadurch gekennzeichnet, daß die Querstromplatten (13) und Parallelstromplatten (14) als gewellte Platten ausgebildet sind.

6. Vorrichtung nach einem der Ansprüche 1 bis 5, dadurch gekennzeichnet, daß zwischen der Reinigungskammer 2. Stufe (5) und dem Reinwassersammelraum (7) eine Überlaufkante (27) auf der Mündungshöhe der Parallelstromplatten (14) bzw. der durch sie gebildeten Zwischenräume angeordnet ist.

7. Vorrichtung nach einem der Ansprüche 1 bis 6, dadurch gekennzeichnet, daß der Reinwassersammelraum (7) einen bodenseitigen Flocken- und Restwasserabzug (28) sowie eine höherliegende Eintrittsöffnung (29) für den Reinwasseraustrittsstutzen (8) aufweist.

8. Vorrichtung nach einem der Ansprüche 1 bis 7, dadurch gekennzeichnet, daß an den Schmutzwassereintrittsstutzen (12) eine auf der Behälteraußenseite montierte Rohrschlange (30) mit einer Schmutzwasserpumoe (31) unter Zwischenschaltung eines Absperrorgans (32) angeschlossen ist und in die Rohrstränge der Rohrschlange (30) Meßleitungen (33) und Dosierleitungen (34) für Additiv-Zugabe münden.

## Claims

1. A transportable device for the conditioning of foul water, more particularly mine water, having a 1st cleaning stage and a 2nd cleaning stage, each cleaning stage containing sets of plates, characterised by a conditioning tank having, in the direction of water flow, a pre-cleaning chamber (2), a 1st-stage cleaning chamber (3) following the pre-cleaning chamber (2), a distributing chamber (4) following the said 1st-stage cleaning chamber (3), and a 2nd-stage cleaning chamber (5) following the distributing chamber (4),
an oil/water fine-separation space (6) preceding the precleaning chamber (2) and a clean-water collecting space (7) with a clean-water outlet union (8) following the 2nd-stage cleaning chamber (5),
the pre-cleaning chamber (2) being divided into a water entry space (10) and a water exit space (11) by a baffle (9) terminating clear of the floor, and a foul-water inlet union (12) opening into the water entry space (10)
the 1st-stage cleaning chamber (3) having a plurality of cross-flow plates (13) set parallel to each other, obliquely and across the direction of water flow, and the 2nd-stage cleaning chamber (5) having a plurality of parallel-flow plates (14) set parallel to each other, obliquely and in the direction of water flow,
mutually separate sediment collection and removal spaces (15,16) being provided beneath the cross-flow plates (13) in the 1st-stage cleaning chamber (3) and the parallel-flow plates (14) in the 2nd-stage cleaning chamber (5) respectively,

and an oil offtake trough (18) being provided in the upper edge region or water level region of the 1st-stage cleaning chamber (3), disposed parallel to the direction of water flow leading outwards, over the pre-cleaning chamber (2) and into the oil/water fine-separation space (6).

2. A device as in Claim 1, characterised in that oil separators (19,20) having drainage ducts (21,22) running back to oil/water fine-separation space (6) are provided in the pre-cleaning chamber (2), one each in the upper edge region or water level region of the water entry space (10) and the water exit space (11) respectively.

3. A device as in Claim 1 or 2, characterised in that the oil/water fine-separation space (6) has an oil discharge union (23) set high up and a water discharge union (24) set low down.

4. A device as in any of Claims 1 to 3, characterised in that the sediment collection and removal space (15) under the cross-flow plates (13) in the 1st-stage cleaning chamber (3) opens into the pre-cleaning chamber (2) near the floor and has an outlet orifice (25) near the floor.

5. A device as in any of Claims 1 to 4, characterised in that the cross-flow plates (13) and the parallel-flow plates (14) are corrugated.

6. A device as in any of Claims 1 to 5, characterised in that an overflow sill (27) is disposed between the 2nd-stage cleaning chamber (5) and the clean-water collecting space (7), at the mouth level of the parallel-flow plates (14) or rather the interspaces between them.

7. A device as in any of Claims 1 to 6, characterised in that the clean-water collecting space (7) has, at its base, an off-take (28) for floccular matter and residual water and, at a higher level, an entry orifice (29) for the clean-water outlet union (8).

8. A device as in any of Claims 1 to 7, characterised in that a pipe coil (30) with a foul-water pump (31) is mounted on the outside of the tank and connected to the foul-water inlet union (12) through an interposed stop-cock (32), gauge ducts (33) and dispensing ducts (34) for additives being mounted on the lengths of piping in the pipe coil (30).

## Revendications

1. Dispositif mobile pour le traitement des eaux usées, en particulier des égouts de mine, comprenant un premier étage d'épuration et un second étage d'épuration et des paquets de plaques dans les étages d'épuration, **caractérisé par le fait** qu'il comprend un réservoir de traitement avec, dans la direction de passage de l'eau, une chambre d'épuration préliminaire (2), une chambre d'épuration du premier étage (3) montée en aval de la chambre d'épuration préliminaire (2), une chambre de distribution (4) montée en aval de la chambre d'épuration (3) et une chambre d'épuration du second étage (5) montée en aval de la chambre de distribution (4), un volume de séparation fine d'huile et d'eau (6) étant disposé en amont de la chambre d'épuration préliminaire (2) et un collecteur d'eau pure (7) avec une tubulure de sortie d'eau pure (8) étant monté en aval de la chambre d'épuration du second étage (5); la chambre d'épuration préliminaire (2) étant divisée par une chicane (9) dégagée du fond en un volume d'entrée d'eau (10) et un volume de sortie d'eau (11) et une tubulure d'entrée d'eau usée (12) débouchant dans le volume d'entrée d'eau (10); la chambre d'épuration du premier étage (3) comprenant une pluralité de plaques d'écoulement transversal (13) disposées parallèlement et en oblique les unes au-dessus des autres et transversalement à la direction d'écoulement de l'eau, et la chambre d'épuration du second étage (5) présentant une pluralité de plaques d'écoulement parallèle (14) disposées parallèlement et en oblique les unes au-dessus des autres ainsi que dans la direction d'écoulement de l'eau; des volumes collecteurs et d'évacuation des sédiments (15, 16) séparés l'un de l'autre étant prévus au-dessous des plaques d'écoulement transversal (13) de la chambre d'épuration du premier étage (3) et des plaques d'écoulement parallèle (14) de la chambre d'épuration du second étage (5), et une goulotte de séparation d'huile (18) conduisant au-delà de la chambre d'épuration préliminaire (2) jusqu'au volume de séparation fine d'huile et d'eau (6) étant disposée, parallèlement à la direction d'écoulement de l'eau, dans la région périphérique supérieure et respectivement dans la région du niveau d'eau de la chambre d'épuration du premier étage (3).

2. Dispositif selon la revendication 1, caractérisé par le fait que dans la chambre d'épuration préliminaire (2), dans la région périphérique supérieure et respectivement dans la région du niveau d'eau du volume d'entrée d'eau (10) et du volume de sortie d'eau (11), est disposé respectivement un séparateur d'huile (19, 20) avec des conduites d'écoulement (21, 22) qui mènent au volume de séparation fine d'huile et d'eau (6).

3. Dispositif selon l'une des revendications 1 ou 2, caractérisé par le fait que le volume de séparation fine d'huile et d'eau (6) comprend une tubulure d'écoulement d'huile (23) en position haute et une tubulure d'écoulement d'eau (24) en position basse.

4. Dispositif selon l'une quelconque des revendications 1 à 3, caractérisé par le fait que le volume collecteur et d'évacuation de sédiments (15) débouche au-dessous des plaques d'écoulement parallèle (13) de la chambre d'épuration du premier étage (3), du côté fond, dans la chambre d'épuration préliminaire (2) et présente un orifice de sortie (25) dans la région du fond.

5. Dispositif selon l'une quelconque des revendications 1 à 4, caractérisé par le fait que les plaques d'écoulement transversal (13) et les plaques d'écoulement parallèle (14) sont conformées en plaques ondulées.

6. Dispositif selon l'une quelconque des revendications 1 à 5, caractérisé par le fait qu'entre la chambre d'épuration du second étage (5) et le collecteur d'eau pure (7), un bord-déversoir (27) est disposé à la hauteur de sortie des plaques d'écoulement parallèle (14) et respectivement des intervalles formés par lesdites plaques.

7. Dispositif selon l'une quelconque des revendications 1 à 6, caractérisé par le fait que le collecteur d'eau pure (7) comprend du côté fond une évacuation de flocons et d'eau résiduelle (28) ainsi qu'un orifice d'entrée (29) pour la tubulure de sortie d'eau pure (8) situé à un niveau plus élevé.

8. Dispositif selon l'une quelconque des revendications 1 à 7, caractérisé par le fait qu'à la tubulure d'entrée d'eau usée (12) est raccordé un serpentin (30) monté sur la surface extérieure du réservoir et équipé d'une pompe à eau usée (31), avec interposition d'un organe d'arrêt (32), et que des lignes de mesure (33) et des conduites de dosage (34) pour l'addition d'additifs débouchent dans les tubes du serpentin (30).

Fig. 1

Fig. 2

Fig. 3

EP 0 354 349 B1

EP 0 354 349 B1

Fig. 4

Fig. 5